(19) **Europäisches Patentamt**
**European Patent Office**
**Office européen des brevets**

(11) **EP 3 090 154 B1**

(12) **FASCICULE DE BREVET EUROPEEN**

(45) Date de publication et mention
de la délivrance du brevet:
**07.02.2018 Bulletin 2018/06**

(51) Int Cl.:
*F01N 9/00* *(2006.01)*  *F01N 3/20* *(2006.01)*
*F01N 11/00* *(2006.01)*

(21) Numéro de dépôt: **14827819.5**

(22) Date de dépôt: **11.12.2014**

(86) Numéro de dépôt international:
**PCT/FR2014/053269**

(87) Numéro de publication internationale:
**WO 2015/092225 (25.06.2015 Gazette 2015/25)**

(54) **DÉTECTION ET QUANTIFICATION DES FUITES D'AMMONIAC EN AVAL D'UN SYSTÈME DE RÉDUCTION CATALYTIQUE SÉLECTIVE D'OXYDES D'AZOTE**

NACHWEIS UND QUANTIFIZIERUNG VON AMMONIAKLECKS ABWÄRTS VON EINEM SYSTEM ZUR SELEKTIVEN KATALYTISCHEN REDUKTION VON STICKOXIDEN

DETECTION AND QUANTIFICATION OF AMMONIA LEAKS DOWNSTREAM FROM A SYSTEM FOR SELECTIVE CATALYTIC REDUCTION OF NITROGEN OXIDES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1363286**

(43) Date de publication de la demande:
**09.11.2016 Bulletin 2016/45**

(73) Titulaire: **Renault S.A.S.**
**92100 Boulogne-Billancourt (FR)**

(72) Inventeurs:
• **CHANZY, Romain**
**F-75116 Paris (FR)**
• **TRAD, Houcem**
**F-78180 Montigny le Bretonneux (FR)**

(56) Documents cités:
**EP-A1- 2 226 482    EP-A1- 2 357 334**
**WO-A1-2014/001804    US-A1- 2010 024 390**
**US-A1- 2011 185 707**

**Description**

La présente invention se rapporte au domaine de la détection et de la quantification des fuites d'ammoniac dans un système de réduction catalytique sélective d'oxydes d'azote.

Les systèmes de réduction catalytique sélective d'oxydes d'azote, aussi nommés catalyseurs SCR (de l'anglais Selective Catalytic Reduction) sont largement utilisés sur les lignes d'échappement des moteurs à combustion interne des véhicules automobiles.

Le principe de fonctionnement d'un catalyseur SCR est basé sur une réaction catalytique de réduction des oxydes d'azotes (NOx), contenus dans les gaz de combustion d'un moteur, par de l'ammoniac ($NH_3$). Un pain de réduction catalytique, généralement composé de zéolithe, constitue le catalyseur des réactions de réduction des oxydes d'azotes par de l'ammoniac dans le catalyseur SCR.

L'ammoniac utilisé dans ces réactions est habituellement obtenu via l'injection d'un mélange d'eau et d'urée (bien connu sous la dénomination commerciale Adblue©). Ce mélange subit des réactions d'hydrolyse et de pyrolyse. Les molécules d'ammoniac, ainsi extraites, se stockent dans le pain de réduction catalytique, pour réagir par la suite avec les oxydes d'azote.

Dans le cas où la capacité de stockage maximale du pain de réduction catalytique est atteinte, les molécules d'ammoniac traversent le pain de réduction catalytique sans être stockées et partent à l'échappement. L'ammoniac est un composé polluant et toxique.

Pour cette raison, la quantité d'ammoniac obtenue par l'injection du mélange d'eau et d'urée, ainsi que la masse d'ammoniac stockée dans le catalyseur doivent être connues et finement adaptées. Un surdosage de l'injection du mélange d'eau et d'urée provoque une fuite d'ammoniac en aval du catalyseur SCR, alors qu'un sous-dosage ne permet pas une réaction de réduction complète des oxydes d'azote contenus dans les gaz de combustion du moteur entrant dans le catalyseur SCR, et provoque des fuites d'oxydes d'azote en aval du catalyseur SCR.

Il existe de nombreux facteurs modifiant le fonctionnement d'un catalyseur SCR ; citons l'état du pain de réduction catalytique, sa température, son vieillissement, le débit des gaz de combustion du moteur traversant le catalyseur SCR, ou encore la concentration d'oxydes d'azote dans ces gaz de combustion reçus du moteur en amont du système SCR. En conséquence la modélisation d'un tel système, et la modélisation de son efficacité de fonctionnement, sont des objectifs relativement complexes à atteindre.

C'est pourquoi, à défaut de disposer d'un modèle suffisamment précis de catalyseur SCR, permettant d'ajuster idéalement l'injection d'ammoniac et de limiter au mieux les fuites d'oxydes d'azote, les lignes d'échappement des moteurs à combustion interne sont aussi souvent dotées d'au moins un capteur d'oxydes d'azote, ou capteur de NOx, en aval du catalyseur SCR. L'objectif de ces capteurs étant de quantifier et de détecter les fuites d'oxydes d'azote en aval du catalyseur SCR.

Afin de mieux contrôler l'injection d'ammoniac dans le catalyseur SCR, et donc d'optimiser le fonctionnement du catalyseur SCR, un problème connu est de détecter et de quantifier les fuites d'ammoniac en aval du catalyseur SCR, se produisant, par exemple, lors du surdosage de l'injection du mélange d'eau et d'urée dans le catalyseur SCR. Actuellement, l'implémentation d'un capteur d'ammoniac dans une ligne d'échappement est bien connue en laboratoire, mais elle n'est pas une solution industrielle.

Plusieurs solutions ont alors été envisagées pour détecter ces fuites d'ammoniac (voir par exemple le document US2010024390). Une solution connue de l'homme du métier, consiste à utiliser une caractéristique particulière des capteurs de NOx actuellement disponibles. En effet, les capteurs de NOx ont pour particularité, involontaire, de ne pas capter uniquement les concentrations d'oxydes d'azote. En particulier, les capteurs de NOx sont aussi sensibles aux concentrations d'ammoniac. Dans le cas d'une fuite simultanée d'oxydes d'azote et d'ammoniac, un capteur de NOx monté en aval du pain de réduction catalytique d'un catalyseur SCR est sensible aux deux composés chimiques sans qu'il puisse identifier les proportions respectives de chacun des composés chimiques.

Ainsi, concernant la détection de fuites d'ammoniac par l'utilisation d'un capteur de NOx en aval d'un catalyseur SCR, nous connaissons le document de brevet US2005/0282285, qui décrit une méthode de détection par impulsion d'injection d'urée dans un catalyseur SCR; le document US2011/0005202, qui décrit un modèle d'analyse fréquentielle, basé sur les mesures issues de deux capteurs de NOx en amont et en aval d'un catalyseur SCR; ou encore le document US2011/0005203 qui décrit une méthode d'évaluation probabiliste, basée sur l'analyse fréquentielle des signaux issus de deux capteurs de NOx en amont et en aval d'un catalyseur SCR. Ces documents présentent des méthodes de détection de fuite non quantitatives.

Le document de brevet WO 2011/093772, décrit un procédé pour estimer la concentration d'oxyde d'azote fuyant en aval d'un catalyseur SCR ainsi que la concentration d'ammoniac fuyant en aval d'un catalyseur SCR. L'estimation de ces concentrations se base sur une modélisation du fonctionnement d'un pain de réduction catalytique d'un catalyseur SCR et sur les signaux issus d'un capteur de NOx en aval du catalyseur SCR.

Il existe, au regard de l'art antérieur, un besoin pour une méthode plus fiable de détection et de quantification des fuites d'ammoniac en aval d'un catalyseur SCR.

A cette fin, il est proposé un procédé de détection et de quantification des fuites d'ammoniac en aval d'un système de réduction catalytique sélective d'oxydes d'azote disposé dans une ligne d'échappement de moteur à combustion interne de véhicule automobile, ledit système comprenant :

- un dispositif d'injection pour injecter un fluide comprenant de l'ammoniac dans la ligne d'échappement du moteur ; et,
- un pain de réduction catalytique, en aval du dispositif d'injection, pour stocker l'ammoniac issu du dispositif d'injection en vue d'une réaction avec les oxydes d'azote contenus dans les gaz de combustion du moteur ;

le procédé comprenant des étapes consistant à :

(a) générer un signal de commande pour contrôler la quantité de fluide comprenant de l'ammoniac injecté par le dispositif d'injection dans la ligne d'échappement ;
(b) recevoir une séquence de valeurs de concentration mesurée issues d'un capteur d'oxydes d'azote disposé en aval du système ;
(c) pour chaque valeur reçue à l'étape (b), recevoir une valeur de concentration d'oxydes d'azote en amont du système ;
(d) calculer une séquence de valeurs représentatives de l'efficacité mesurée du pain de réduction catalytique, en fonction, pour chacune desdites valeurs calculées, d'une valeur reçue à l'étape (b) et de la valeur correspondante reçue à l'étape (c) ;
(e) évaluer une valeur d'efficacité de référence du pain de réduction catalytique, à partir d'au moins une valeur de la séquence calculée à l'étape (d), correspondant à une quantité de fluide injecté telle que le pain de réduction catalytique stocke suffisamment d'ammoniac pour que se produise une réaction de réduction totale des oxydes d'azotes et alors que, concomitamment, le pain de réduction catalytique a une capacité de stockage d'ammoniac insaturée ; et
(f) quantifier la concentration d'ammoniac dans les gaz d'échappement en aval du système en fonction :

- de la valeur d'efficacité de référence du pain de réduction catalytique ;
- d'au moins une valeur de concentration mesurée issue du capteur d'oxydes d'azote disposé en aval du système ; et,
- de la valeur correspondante, pour ladite au moins une valeur de concentration mesurée, de la concentration d'oxydes d'azote en amont du système.

Ce procédé permet donc d'obtenir une estimation fiable de la concentration d'oxyde d'azote réelle fuyant en aval du catalyseur SCR ainsi que de la concentration d'ammoniac réelle fuyant en aval du catalyseur SCR, en déterminant une valeur d'efficacité de référence du pain de réduction catalytique. Ce procédé peut ainsi permettre de s'affranchir de la modélisation du fonctionnement d'un pain de réduction catalytique d'un catalyseur SCR.
L'invention ne se limite à un ordre précis de ces étapes que dans la mesure où cet ordre est indispensable pour la détection et la quantification des fuites d'ammoniac en aval du catalyseur SCR. Par exemple, il est possible d'inverser l'ordre de réalisation des étapes (b) et (c).
Avantageusement, lorsque la valeur de concentration d'oxydes d'azote en amont du système de réduction catalytique sélective d'oxydes d'azote est reçue par un capteur de NO$_x$ amont disposé en amont du système de réduction catalytique sélective d'oxydes d'azote, alors le procédé peut permettre la quantification des fuites d'ammoniac uniquement par le biais de deux capteurs de NO$_x$, et sans utiliser aucun moyen de modélisation.
Avantageusement et de façon non limitative, le procédé peut comprendre, au cours de l'étape (e), le calcul d'une séquence de valeurs de variation de l'efficacité mesurée du pain de réduction catalytique, à partir de la séquence calculée à l'étape (d). On peut ainsi estimer la valeur d'efficacité de référence par l'étude des variations de l'efficacité mesurée du pain de réduction catalytique.
En particulier, la détection de l'instant au cours duquel le pain de réduction catalytique atteint une valeur d'efficacité de référence peut être effectuée par l'étude de la dérivée temporelle de l'efficacité mesurée du pain de réduction catalytique.
Cette séquence de valeurs de variation peut aussi être obtenue en calculant l'écart relatif entre les valeurs consécutives de la séquence de valeurs représentatives de l'efficacité mesurée du pain de réduction catalytique.
Avantageusement et de façon non limitative, le procédé peut comprendre, au cours de l'étape (e), la détection d'une diminution des valeurs de la séquence de valeurs de variation de l'efficacité mesurée du pain de réduction catalytique. Cette diminution de la variation correspond à une diminution des valeurs de l'efficacité de référence. La détection de cette diminution peut ainsi permettre de définir, rapidement et de manière fiable, l'efficacité de référence du pain de réduction catalytique. Dit autrement, on choisit comme efficacité de référence du pain de réduction catalytique l'efficacité mesurée du pain de réduction catalytique obtenue au commencement des fuites d'ammoniac en aval du système de réduction catalytique sélective d'oxydes d'azote.

Avantageusement et de façon non limitative, le procédé peut comprendre, au cours de l'étape (e), la détection d'une stagnation des valeurs de la séquence de valeurs représentatives de l'efficacité mesurée du pain de réduction catalytique. Ceci permet, dans un mode de réalisation alternatif, de se baser sur la détection d'un plateau d'efficacité pour déterminer l'efficacité de référence du pain de réduction catalytique. Ce plateau d'efficacité peut correspondre à une séquence de valeurs représentatives de l'efficacité mesurée du pain de réduction catalytique au cours de laquelle, pour chaque valeur, la différence entre la valeur et la valeur moyenne de la séquence, est inférieure, en valeur absolue, à une valeur limite définie. Cette valeur limite peut correspondre à une valeur de tolérance liée au bruit auquel peuvent être soumis les capteurs de NO$_x$. La définition d'une telle valeur de tolérance au bruit est une pratique bien connue de l'homme du métier.

Avantageusement et de façon non limitative, le procédé peut comprendre, au cours de l'étape (e), la détection de la diminution des valeurs de la séquence de valeurs de variation de l'efficacité mesurée du pain de réduction catalytique est effectuée seulement si une stagnation des valeurs de la séquence de valeurs représentatives de l'efficacité mesurée du pain de réduction catalytique est détectée. Ceci permet de s'assurer qu'un plateau d'efficacité de référence du pain de réduction catalytique est atteint, avant d'effectuer la détection d'une diminution des valeurs de la séquence de valeurs de variation de l'efficacité mesurée. Les risques de fausses détections liées au bruit qui peut être présent sur les valeurs transmises par le capteur de NO$_x$ monté en aval du catalyseur SCR peuvent être réduits et l'estimation de l'efficacité de référence du pain de réduction catalytique peut être améliorée.

Il est en outre proposé un dispositif de détection et de quantification des fuites d'ammoniac en aval d'un système de réduction catalytique sélective d'oxydes d'azote disposé dans une ligne d'échappement de moteur à combustion interne de véhicule automobile, ledit système comprenant :

- un dispositif d'injection pour injecter un fluide comprenant de l'ammoniac dans la ligne d'échappement du moteur ; et,
- un pain de réduction catalytique, en aval du dispositif d'injection, pour stocker l'ammoniac issu du dispositif d'injection en vue d'une réaction avec les oxydes d'azote contenus dans les gaz de combustion du moteur ;

ledit dispositif de détection et de quantification des fuites d'ammoniac en aval d'un système de réduction catalytique sélective comprenant :

- des moyens de transmission agencés pour transmettre un signal de commande pour contrôler la quantité de fluide comprenant de l'ammoniac injecté par le dispositif d'injection dans la ligne d'échappement ;
- des moyens de réception pour recevoir une séquence de valeurs de concentration mesurée issues d'un capteur d'oxydes d'azote disposé en aval du système, et une séquence de valeurs de concentration d'oxydes d'azote en amont du système ;
- des moyens de traitement agencés pour calculer une séquence de valeurs représentatives de l'efficacité mesurée du pain de réduction catalytique, en fonction, pour chacune desdites valeurs, d'une valeur de la séquence de valeurs de concentration mesurée et d'une valeur de la séquence de valeurs de concentration d'oxydes d'azote en amont du système ;

dans lequel les moyens de traitement sont, en outre, agencés pour évaluer une valeur d'efficacité de référence du pain de réduction catalytique, à partir d'au moins une valeur de la séquence de valeurs représentatives de l'efficacité mesurée du pain de réduction catalytique ; et pour quantifier la quantité d'ammoniac fuyant en aval du système en fonction de la valeur d'efficacité de référence du pain de réduction catalytique, d'au moins une valeur de concentration mesurée et d'au moins une valeur de concentration d'oxydes d'azote en amont du système.

Les moyens de réception peuvent par exemple comprendre une broche d'entrée, un port d'entrée ou autre.

Les moyens de transmission peuvent par exemple comprendre une broche de sortie, un port de sortie, ou autre.

Les moyens de traitement peuvent par exemple comprendre un coeur de processeur ou CPU (de l'anglais « Central Processing Unit ») ou autre.

Ce dispositif peut par exemple comprendre ou être intégré dans un ou plusieurs moyens de traitement du signal, par exemple un processeur, par exemple un micro contrôleur, un micro processeur, un DSP (de l'anglais « Digital Signal Processor »), ou autres.

Il est en outre proposé un ensemble de détection et de quantification des fuites d'ammoniac en aval d'un système de réduction catalytique sélective d'oxydes d'azote disposé dans une ligne d'échappement de moteur à combustion de véhicule automobile comprenant :

- un capteur d'oxydes d'azote disposé en aval du système ;
- un moyen de transmission d'une séquence de valeurs de concentration d'oxydes d'azote en amont du système ;
- un dispositif de détection et de quantification selon la revendication 6, ce dispositif de détection est en communication avec le capteur d'oxydes d'azote monté en aval du système et avec le moyen de transmission d'une séquence de valeurs de concentration d'oxydes d'azote en amont du système.

Les moyens de transmission d'une séquence de valeurs de concentration d'oxydes d'azote en amont du système de réduction catalytique sélective d'oxydes d'azote peuvent par exemple comprendre une broche de sortie, un port de sortie, ou autre.

Selon d'autres caractéristiques avantageuses de l'ensemble de détection et de quantification des fuites d'ammoniac en aval d'un système de réduction catalytique d'oxydes d'azote :

L'ensemble comprend, en outre, un capteur d'oxydes d'azote amont disposé en amont du système, ce capteur amont étant en communication avec le moyen de transmission d'une séquence de valeurs de concentration d'oxydes d'azote en amont du système. Ainsi, la séquence de valeurs de concentration d'oxydes d'azote en amont du système est issue d'un capteur d'oxydes d'azote.

L'invention concerne aussi un véhicule automobile, comprenant un ensemble de détection et de quantification des fuites d'ammoniac en aval d'un système de réduction catalytique sélective d'oxydes d'azote.

Enfin l'invention concerne un programme d'ordinateur comprenant des instructions pour effectuer les étapes du procédé de détection et de quantification des fuites d'ammoniac en aval d'un système de réduction catalytique sélective d'oxydes d'azote, lorsque ces instructions sont exécutées par un processeur.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

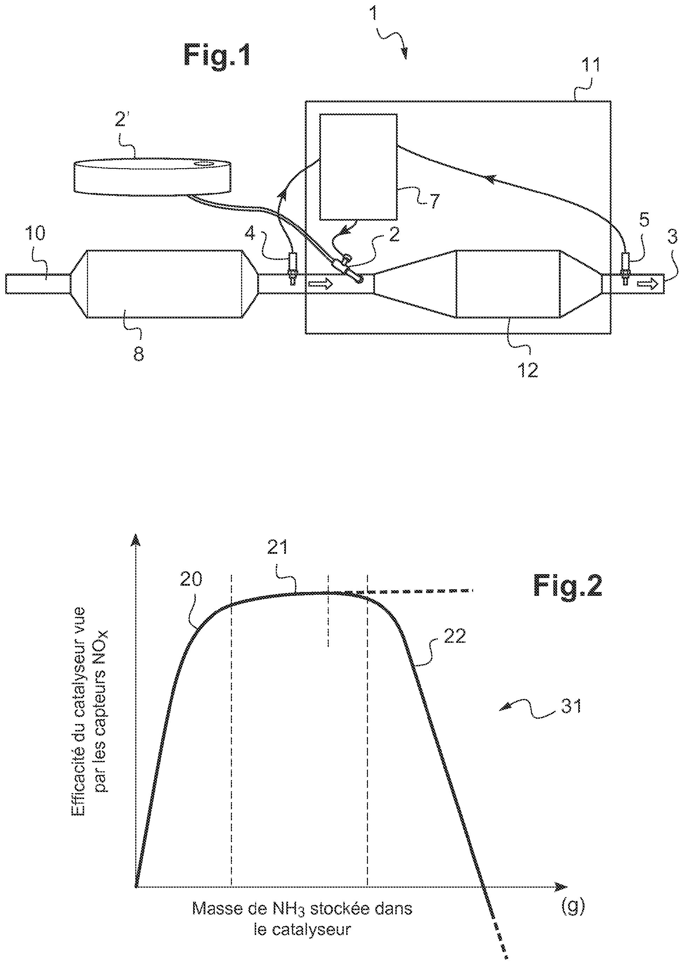

- la figure 1 montre un exemple d'ensemble de détection et de quantification des fuites d'ammoniac en aval d'un système de réduction catalytique sélective d'oxydes d'azote installé dans une ligne d'échappement d'un moteur à combustion interne de véhicule automobile, selon un mode de réalisation de l'invention ;

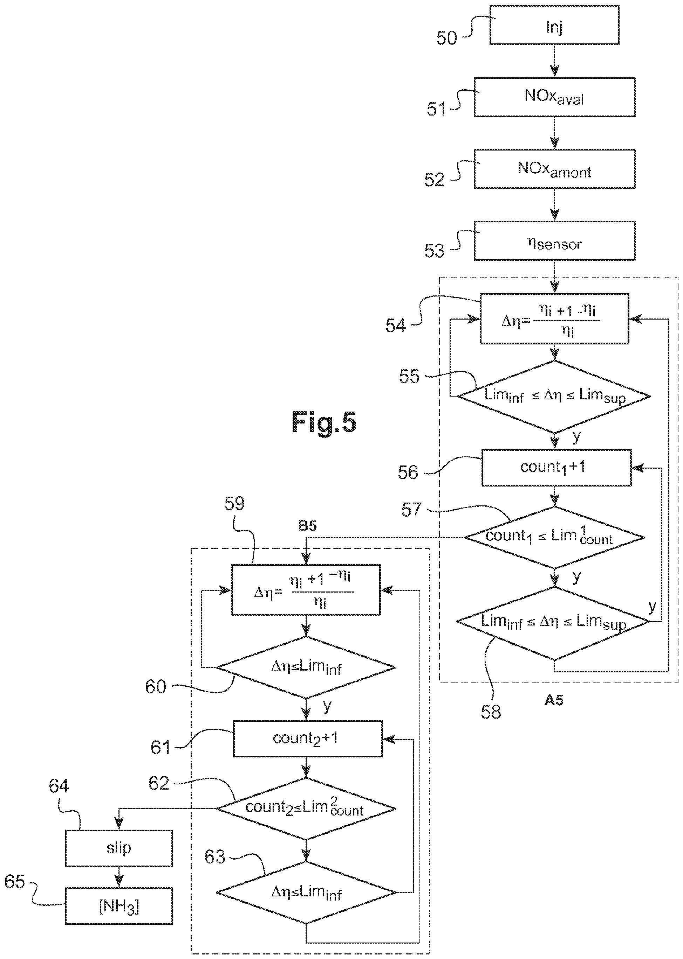

- la figure 2 représente un graphique avec, en abscisse, des valeurs, en grammes, de masse d'ammoniac stockée dans le pain de réduction catalytique sélective du système de la figure 1, et en ordonnée, des valeurs, sans dimension, d'efficacité mesurée du pain de réduction catalytique; ces valeurs étant susceptibles d'être obtenues lors de l'application d'un procédé selon le mode de réalisation de la figure 5 ;

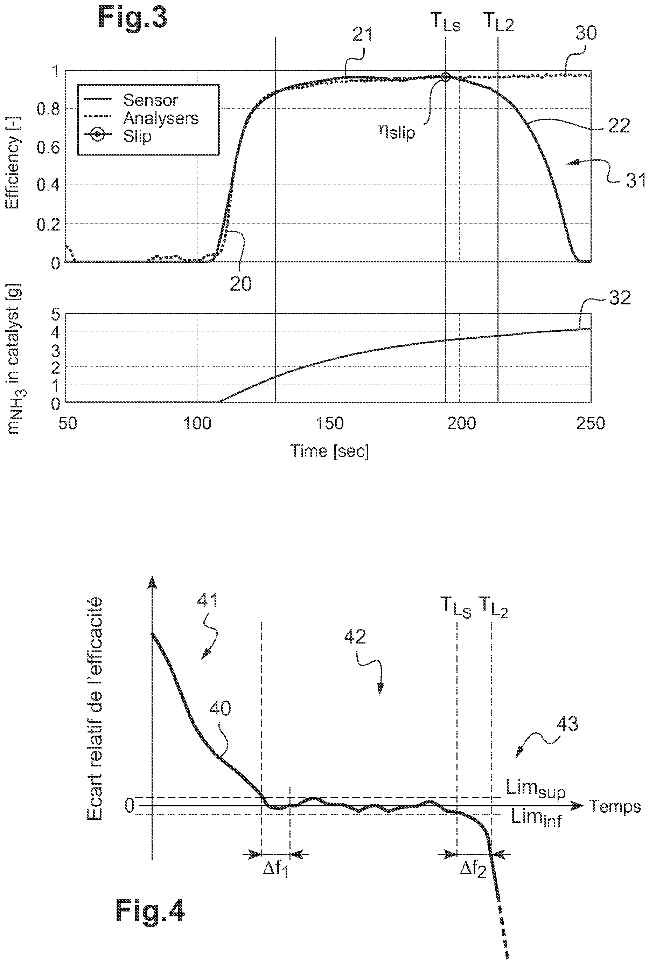

- la figure 3 représente, sur un premier graphique, une courbe de l'efficacité mesurée du pain de réduction catalytique d'un système de réduction catalytique sélective d'oxydes d'azote, susceptible d'être obtenue lors de l'application d'un procédé selon le mode de réalisation de la figure 5, et une courbe de l'efficacité réelle du pain de réduction catalytique, susceptible d'être obtenue dans ce mode de réalisation de la figure 5. Dans ce premier graphique, l'axe des abscisses correspond au temps, en secondes, et l'axe des ordonnées correspond à des valeurs d'efficacité, sans dimension. La figure 3 représente aussi un second graphique, avec le même axe des abscisses que le premier graphique, et en ordonnée des valeurs, en grammes, de masse d'ammoniac stockée dans le pain de réduction catalytique, ces valeurs étant susceptibles d'être obtenue lors de l'application d'un procédé selon le mode de réalisation de la figure 5 ;

- la figure 4, représente un graphique avec en abscisse le temps, en secondes, et en ordonnée des valeurs d'écart relatif de l'efficacité du pain de réduction catalytique, sans dimension. Ces valeurs sont susceptibles d'être obtenues lors de l'application d'un procédé selon le mode de réalisation de la figure 5 ;
- la figure 5, représente un logigramme correspondant à un exemple particulier d'un procédé d'évaluation de l'efficacité de référence du pain de réduction catalytique, selon un mode de réalisation de l'invention.

La figure 1 représente une ligne d'échappement 1 d'un moteur à combustion interne, par exemple un moteur de véhicule automobile servant à recueillir les gaz de combustion produits par le moteur (non représenté), à les dépolluer par post-traitement, et à les évacuer vers l'extérieur du véhicule automobile (non représenté). Les gaz de combustion produits par le moteur sont susceptibles de contenir des oxydes d'azote, plus particulièrement quand le moteur est un moteur diesel, fonctionnant en mélange pauvre. Dans ce mode de réalisation, la ligne d'échappement 1 comprend une entrée de gaz de combustion 10, dirigeant un flux de gaz vers un ensemble de post-traitements des gaz d'échappement 8, comprenant un filtre à particules et un catalyseur d'oxydation Diesel. Le flux de gaz traverse ensuite un catalyseur SCR 11 puis est dirigé vers une sortie 3 de la ligne d'échappement 1.

Le catalyseur SCR 11 comprend un pain de réduction catalytique 12 à travers lequel passe le flux de gaz d'échappement. Le catalyseur SCR 11 comprend en outre un dispositif d'injection 2, par exemple un injecteur, pour injecter, dans le catalyseur SCR 11, un fluide composé d'un mélange d'eau et d'urée issu d'un réservoir 2'. L'injecteur 2 est installé en amont du pain de réduction catalytique 12, de telle sorte que le fluide composé d'un mélange d'eau et d'urée subisse des réactions de pyrolyse et d'hydrolyse, et produise de l'ammoniac dans le flux de gaz de combustion. L'ammoniac ainsi libéré pénètre et se stocke dans le pain de réduction catalytique 12. Le pain de réduction catalytique 12 devient alors le siège d'une réaction de réduction des oxydes d'azote compris dans le flux de gaz de combustion avec l'ammoniac stocké.

Un capteur d'oxydes d'azote amont 4, dit aussi capteur amont 4, est installé en amont du catalyseur SCR 11 (ou bien, dans un mode de réalisation alternatif et non représenté, dans le catalyseur SCR 11, en amont de l'injecteur 2), de telle sorte que le flux de gaz de combustion entrant dans le catalyseur SCR 11 passe préalablement au contact du capteur d'oxydes d'azote amont 4.

Un capteur d'oxydes d'azote aval 5, ou capteur aval 5, est installé en aval du catalyseur SCR 11 (ou bien, dans un mode de réalisation alternatif et non représenté, dans le catalyseur SCR 11, en aval du pain de réduction catalytique 12), de telle sorte que le flux de gaz d'échappement sortant du catalyseur SCR, passe au contact du capteur aval 5.

Des moyens de traitement 7, par exemple un processeur, sont reliés aux capteurs 4,5 ainsi qu'à l'injecteur 2. Ce processeur 7 permet, entre autre, de commander l'injection du mélange d'eau et d'urée dans le flux de gaz de combustion en amont du pain de réduction catalytique 12 dans le catalyseur SCR 11, en fonction de paramètres tels que la valeur du signal fourni par le capteur amont 4, ainsi que la valeur du signal fourni par le capteur aval 5 du catalyseur SCR 11.

La figure 5 illustre schématiquement un exemple de procédé de détection et de quantification des fuites d'ammoniac en aval d'un catalyseur SCR 11 réalisé par le processeur, référencé 7, sur la figure 1.

Le procédé comprend une étape de commande 50 du dispositif d'injection 2 pour que ce dispositif injecte un mélange d'eau et d'urée dans la ligne d'échappement 1, de sorte qu'il produise, au bout d'un certain temps, une situation de saturation de la capacité de stockage de l'ammoniac dans le pain de réduction catalytique 12.

Le procédé comprend en outre, une étape de réception 51 d'une séquence de valeurs de mesure du capteur d'oxydes d'azote aval 5.

On reçoit également une séquence de valeurs de concentration d'oxydes d'azote en amont du catalyseur SCR 11, au cours d'une étape de réception 52.

Chacune des valeurs de la séquence de valeurs de concentration d'oxydes d'azote en amont du catalyseur SCR 11 est associée à une valeur de la séquence de valeurs de mesure du capteur aval 5, en fonction de l'instant d'échantillonnage.

Dans cet exemple de réalisation, les valeurs de concentration d'oxydes d'azote en amont du catalyseur SCR 11 sont issues d'un capteur d'oxydes d'azote 4 disposé en amont du catalyseur SCR 11.

Ces étapes sont suivies d'une étape de calcul 53 par le processeur 7, d'une séquence de valeurs représentatives de l'efficacité mesurée du pain de réduction catalytique 12. Chaque valeur de la séquence de valeurs représentatives de l'efficacité mesurée du pain de réduction catalytique 12 est obtenue selon la formule :

$$\eta_{sensor} = 1 - \frac{[Sens]_{ds}}{[Sens]_{us}} = 1 - \frac{[NO_x]_{ds} + [NH_3]_{ds}}{[NOx]_{us}} \tag{1}$$

Dans laquelle :

$\eta_{sensor}$ est une valeur représentative de l'efficacité mesurée du pain de réduction catalytique 12, à un instant donné ;
$[Sens]_{ds}$ est une valeur de mesure du capteur aval 5, correspondant à cet instant donné ;
$[Sens]_{us}$ est une valeur de mesure du capteur amont 4, correspondant à cet instant donné.

On comprendra que le logigramme de la figure 5 a été simplifié à des fins de clarté. En particulier, ces différentes étapes de réception 51 et 52 et de calcul 53, pourront avantageusement être mises en oeuvre au moyen d'une boucle, chaque exécution de la boucle correspondant à une valeur de séquence.

La courbe d'efficacité mesurée 31, représentée sur les figures 2 et 3, correspond à une séquence de valeurs $\eta_{sensor}$, obtenues dans ce mode de réalisation, en fonction de la masse d'ammoniac stockée dans le pain de réduction catalytique 12 et pour une concentration d'oxyde d'azote constante dans le flux de gaz d'échappement en amont du catalyseur SCR 11.

Les capteurs 4,5 sont généralement soumis à un bruit perturbant leurs mesures. Ce bruit est lié aux conditions de fonctionnement des capteurs d'oxydes d'azote dans une ligne d'échappement 1. Pour limiter l'impact de ce bruit sur les résultats obtenus dans la séquence de valeurs $n_{sensor}$, on peut, au cours d'une étape non représentée, filtrer la séquence de valeurs $\eta_{sensor}$ à l'aide, par exemple, d'une moyenne glissante ou d'un filtrage passe-bas.

La demanderesse a observé, en référence aux figures 2 et 3, que la courbe d'efficacité mesurée 31 présentait une portion de croissance 20, un plateau 21 et une portion de décroissance 22. On observe, en outre, que cette portion de décroissance 22 est absente d'une courbe d'efficacité réelle 30, figure 3. L'efficacité réelle représente l'efficacité du pain de réduction catalytique 12 telle qu'elle pourrait être estimée à partir de mesures issues notamment d'un capteur d'ammoniac en aval du catalyseur SCR 11.

Cette évolution de l'efficacité mesurée, représentée par la courbe 31, peut être liée à la quantité d'ammoniac stockée dans le pain de réduction catalytique 12, représentée par la courbe 32, figure 3.

Le procédé comprend ensuite un ensemble d'étapes A5 visant à détecter une séquence de stagnation des valeurs $\eta_{sensor}$. Cette séquence de stagnation correspond au plateau 21 de le courbe d'efficacité mesurée 31.

Cet ensemble d'étapes A5, du procédé, comporte une étape de calcul 54, par le processeur 7, d'une valeur $\Delta\eta$ représentative de la variation de l'efficacité mesurée $\eta_{sensor}$, pour l'instant courant, ici en appliquant la formule suivante :

$$\Delta\eta = \frac{\eta_{t+1} - \eta_t}{\eta_t} \qquad (2)$$

Dans laquelle :

$\Delta\eta$ est une valeur de variation de l'efficacité mesurée du pain de réduction catalytique 12, pour un instant donné ;
$\eta_t$ est une valeur d'efficacité mesurée du pain de réduction catalytique 12, correspondant à cet instant donné ;
$\eta_{t+1}$ est une valeur d'efficacité mesurée du pain de réduction catalytique 12 pour l'instant suivant l'instant donné.

L'intervalle de temps entre deux instants est déterminé de telle sorte qu'il soit supérieur au pas de temps d'acquisition des signaux du capteur aval 5 et du capteur amont 4.

Le calcul de la valeur de variation $\Delta\eta$, ne saurait se limiter à cette formule (2). Tout calcul permettant d'obtenir un équivalent à l'écart relatif des valeurs de la séquence de valeurs représentatives de l'efficacité mesurée du pain de réduction catalytique 12 peut se substituer à cette formule (2). Il peut, par exemple, s'agir d'un calcul de la dérivée temporelle de l'évolution de l'efficacité mesurée du pain de réduction catalytique 12.

La figure 4 illustre une courbe 40, correspondant à l'évolution des valeurs $\Delta\eta$, en fonction du temps, dans ce mode de réalisation du procédé.

La demanderesse a observé, en référence à la figure 4, que la courbe 40, présente une portion de stabilisation 41, une portion de stagnation 42, puis une portion de décroissance 43.

De retour à la figure 5, lors d'une étape suivante de comparaison 55, on vérifie que la valeur $\Delta\eta$ soit comprise entre une limite basse $Lim_{inf}$ et une limite haute $Lim_{sup}$. Si la valeur $\Delta\eta$ courante est comprise entre ces deux limites $Lim_{inf}$ et $Lim_{sup}$, on considère qu'entre les deux instants correspondants à la valeur $\Delta\eta$ courante, l'efficacité a stagné.

En référence à la figure 4, les limites $Lim_{inf}$ et $Lim_{sup}$ sont des valeurs constantes proches de zéro, lesquelles définissent la tolérance au bruit auquel sont soumis les capteurs d'oxydes d'azote 4,5. La détermination des valeurs des limites $Lim_{inf}$ et $Lim_{sup}$ peut être effectuée empiriquement.

De retour à la figure 5, dans le cas où cette valeur $\Delta\eta$ n'est pas comprise entre les limites $Lim_{inf}$ et $Lim_{sup}$, le processeur 7 réexécute l'étape de calcul 54.

Sinon le processeur 7 passe à une étape d'incrémentation 56 d'une variable de comptage $count_1$, initialement égale à zéro.

L'étape d'incrémentation 56, est suivie d'une étape de comptage 57, au cours de laquelle la valeur incrémentée $count_1$, est comparée à un laps de temps $\Delta f_1$. La valeur d'incrément peut correspondre à l'intervalle de temps entre deux acquisitions des capteurs amont 4 et aval 5.

En référence à la figure 4, $\Delta f_1$, correspond à un intervalle de temps minimum pour la stagnation de la courbe 40, dans un cas extrême, correspondant, par exemple, à un pain de réduction catalytique en mauvais état, vieux et soumis à des conditions de températures élevées.

Si la valeur de la variable $count_1$, est supérieure à $\Delta f_1$, il est considéré que la séquence de stagnation des valeurs $\eta_{sensor}$ a été détectée et le processeur passe à un ensemble d'étapes B5 du procédé, explicitée plus bas, qui vise à détecter le début d'une séquence de décroissance de $\Delta\eta$.

Sinon, le processeur passe à une étape 58 de calcul d'une valeur $\Delta\eta$ pour l'instant suivant. On teste aussi au cours de cette étape 58, si la valeur $\Delta\eta$ est comprise entre la limite basse $Lim_{inf}$ et la limite haute $Lim_{sup}$.

Dans le cas où la valeur $\Delta\eta$ est inférieure à $Lim_{inf}$ ou supérieure à $Lim_{sup}$, la variable $count_1$, est réinitialisée, au cours d'une étape non représentée, et le processeur réexécute l'étape de calcul 54.

Sinon, le processeur 7 passe à l'étape d'incrémentation 56.

Le début de la séquence de décroissance, que cet ensemble d'étapes B5 vise à détecter, correspond à la portion de décroissance 43 de la courbe 40 sur la figure 4.

Dans une étape de calcul 59, le processeur calcule une nouvelle valeur $\Delta\eta$.

On compare ensuite, au cours d'une étape 60, si la valeur $\Delta\eta$ est inférieure à la valeur de $\text{Lim}_{\text{inf}}$.

Dans le cas où la valeur $\Delta\eta$ n'est pas inférieure à la valeur de la limite $\text{Lim}_{\text{inf}}$, le processeur 7 exécute de nouveau l'étape de calcul 59.

Sinon, le processeur 7 effectue une étape d'incrémentation 61 d'une variable de comptage $\text{count}_2$, initialement égale à zéro. L'étape d'incrémentation 61, est suivie d'une étape 62, au cours de laquelle la valeur incrémentée de la variable $\text{count}_2$ est comparée à un laps de temps $\Delta f_2$. La valeur d'incrément peut correspondre à l'intervalle de temps entre deux acquisitions des capteurs 4,5.

En référence à la figure 4, $\Delta f_2$ correspond à un intervalle de temps minimum pour la détection de la décroissance de la courbe 40. La prise en compte d'un tel intervalle de temps $\Delta f_2$ permet de limiter les fausses détections de décroissance pouvant être liées au bruit auquel sont soumis les capteurs 4,5.

Si la valeur de la variable $\text{count}_2$ est supérieure à la valeur de $\Delta f_2$, on considère que la séquence de décroissance de $\Delta\eta$ a été détectée et le processeur exécute une étape 64, explicitée plus bas.

Sinon, le processeur exécute une étape 63 de calcul d'une valeur $\Delta\eta$ pour l'instant suivant. On évalue, aussi au cours de cette étape 63, si la valeur $\Delta\eta$ calculée est inférieure à la valeur de $\text{Lim}_{\text{inf}}$.

Dans le cas où la valeur $\Delta\eta$ est supérieure à la valeur de $\text{Lim}_{\text{inf}}$, la variable $\text{count}_2$ est réinitialisée, et le processeur réexécute l'étape de calcul 59.

Sinon, le processeur exécute l'étape d'incrémentation 61.

Les ensembles d'étapes A5 et B5 peuvent être avantageusement mis en oeuvre en parallèle des étapes de réception 51 et 52 et de l'étape de calcul 53, en particulier lorsque celles-ci sont mises en oeuvre au moyen d'une boucle. Ainsi, le calcul des valeurs $\Delta\eta$ peut, avantageusement, s'effectuer en temps réel, par exemple au rythme de l'acquisition des valeurs de concentrations par les capteurs 4,5.

Lors de l'étape 64 du procédé, on définit une valeur d'efficacité de référence $\eta_{slip}$ comme étant égale à la valeur d'efficacité mesurée, pour l'instant courant, issue de la séquence de valeurs représentatives de l'efficacité mesurée du pain de réduction catalytique 12. L'instant de décroissance $T_{L2}$ est alors considéré comme étant l'instant courant. L'instant de décroissance $T_{L2}$ correspond à un instant immédiatement après le début des fuites d'ammoniac en aval du catalyseur SCR 11.

En référence à la figure 4, la demanderesse observe que $T_{L2}$ arrive après un instant $T_{LS}$, correspondant à l'instant théorique de début des fuites d'ammoniac en aval du catalyseur SCR 11. Ainsi, plus la valeur de $\Delta f_2$ est petite, plus l'instant $T_{L2}$ sera proche de l'instant $T_{LS}$.

On peut calculer la valeur d'efficacité de référence $\eta_{slip}$ par la formule suivante :

$$\eta_{slip} = \frac{[Sens]_{us}^{Ls} - [Sens]_{ds}^{Ls}}{[Sens]_{us}^{Ls}} \approx \frac{[Sens]_{us}^{L2} - [Sens]_{ds}^{L2}}{[Sens]_{us}^{L2}} \tag{3}$$

Dans laquelle :

$[Sens]_{ds}^{Ls}$ correspond à une valeur de mesure du capteur aval 5 à l'instant de fuite $T_{Ls}$.
$[Sens]_{us}^{Ls}$ correspond à une valeur de mesure du capteur amont 4 à l'instant de fuite $T_{Ls}$.
$[Sens]_{ds}^{L2}$ correspond à une valeur de mesure du capteur aval 5 à l'instant de décroissance $T_{L2}$.
$[Sens]_{us}^{Ls}$ correspond à une valeur de mesure du capteur amont 4 à l'instant de décroissance $T_{L2}$.

Le processeur passe ensuite à une étape 65 de calcul de la concentration d'ammoniac fuyant en aval du catalyseur SCR 11.

On peut calculer la concentration d'ammoniac fuyant en aval du catalyseur SCR 11 par cette formule :

$$[NH_3]_{ds} = [Sens]_{ds} - ((1 - \eta_{slip}) \times [Sens]_{us}) \tag{4}$$

Dans laquelle :

$[NH_3]_{ds}$ est la concentration d'ammoniac fuyant en aval du catalyseur SCR 11, pour un instant donné.
$[Sens]_{ds}$ correspond à une valeur de mesure du capteur aval 5 à l'instant donné.
$[Sens]_{us}$ correspond à une valeur de mesure du capteur amont 4 à l'instant donné.

Dès lors, cette étape 65 peut, avantageusement, être répétée pour tous les instants suivants, en parallèle des étapes de réception 51 et 52, en particulier lorsque celles-ci sont mises en oeuvre au moyen d'un boucle. Ceci peut permettre de calculer en temps réel la concentration d'ammoniac fuyant en aval du catalyseur SCR 11.

On peut, en outre, calculer, dans une étape non représentée, la concentration d'oxydes d'azote fuyant en aval du catalyseur SCR 11, par la formule suivante :

$$\left[NO_x\right]_{ds} = (1 - \eta_{slip}) \times \left[Sens\right]_{us} \qquad (5)$$

Dans laquelle :

$[Sens]_{us}$ correspond à une valeur de mesure du capteur amont 4 à l'instant donné.

Pour obtenir une estimation plus fine de la concentration d'ammoniac fuyant en aval du pain de réduction catalytique 12, on peut aussi considérer la formule suivante :

$$\left[NH_3^{réel}\right]_{ds}(t) = a_1 \times \sqrt{\left[NH_3\right]_{ds}(t - \Delta t)} + a_2 \times \left[NH_3\right]_{ds}(t - \Delta t) \qquad (6)$$

Dans laquelle t correspond à l'instant courant ; $a_1$ et $a_2$ sont des constantes définies lors d'une phase de conception préalable à l'aide de moyens de spectroscopie infrarouge à transformée de Fourier pour quantifier les fuites réelles ; et $\Delta t$ est un intervalle de temps moyen estimé entre les instants $T_{L2}$ et $T_{Ls}$.

## Revendications

1. Procédé de détection et de quantification des fuites d'ammoniac en aval d'un système de réduction catalytique sélective (11) d'oxydes d'azote disposé dans une ligne d'échappement (1) de moteur à combustion interne de véhicule automobile, ledit système (11) comprenant :

   un dispositif d'injection (2) pour injecter un fluide comprenant de l'ammoniac dans la ligne d'échappement (1) ; et, un pain de réduction catalytique (12), en aval du dispositif d'injection (2), pour stocker l'ammoniac issu du dispositif d'injection (2) en vue d'une réaction avec les oxydes d'azote contenus dans les gaz de combustion du moteur ;

   ledit procédé comprenant des étapes consistant à :

   (a) générer (50) un signal de commande pour contrôler la quantité de fluide comprenant de l'ammoniac injecté par le dispositif d'injection (2) dans la ligne d'échappement (1) ;
   (b) recevoir (51) une séquence de valeurs de concentration mesurée issues d'un capteur d'oxydes d'azote (5) disposé en aval du système (11) ;
   (c) pour chaque valeur reçue à l'étape (b), recevoir (52) une valeur de concentration d'oxydes d'azote en amont du système (11) ;
   (d) calculer (53) une séquence de valeurs représentatives de l'efficacité mesurée du pain de réduction catalytique (12), en fonction, pour chacune desdites valeurs calculées, d'une valeur reçue à l'étape (b) et de la valeur correspondante reçue à l'étape (c) ;
   (e) évaluer (A5, B5, 64) une valeur d'efficacité de référence ($\eta_{slip}$) du pain de réduction catalytique (12), à partir d'au moins une valeur de la séquence calculée à l'étape (d), correspondant à une quantité de fluide injecté telle que le pain de réduction catalytique (12) stocke suffisamment d'ammoniac pour que se produise une réaction de réduction totale des oxydes d'azotes et alors que, concomitamment, le pain de réduction catalytique (12) a une capacité de stockage d'ammoniac insaturée ; et
   (f) quantifier (65) la concentration d'ammoniac dans les gaz d'échappement en aval du système de réduction catalytique sélective (11) en fonction :

   - de la valeur d'efficacité de référence ($\eta_{slip}$) du pain de réduction catalytique (12) ;
   - d'au moins une valeur de concentration mesurée issue du capteur d'oxydes d'azote (5) disposé en aval du système ; et,

- de la valeur correspondante, pour ladite au moins une valeur de concentration mesurée, de concentration d'oxydes d'azote en amont du système (11).

2. Procédé selon la revendication 1, comprenant, au cours de l'étape (e), calculer (54, 59) une séquence de valeurs de variation de l'efficacité mesurée du pain de réduction catalytique (12), à partir de la séquence calculée à l'étape (d).

3. Procédé selon la revendication 2, comprenant, au cours de l'étape (e), détecter (B5) une diminution des valeurs de la séquence de valeurs de variation de l'efficacité mesurée du pain de réduction catalytique (12).

4. Procédé selon l'une quelconque des revendications 1 à 3, comprenant, au cours de l'étape (e), détecter (A5) une stagnation des valeurs de la séquence de valeurs représentatives de l'efficacité mesurée du pain de réduction catalytique (12).

5. Procédé selon la revendication 4 lorsqu'elle dépend de la 3, dans lequel, au cours de l'étape (e), la détection de la diminution des valeurs de la séquence de valeurs de variation de l'efficacité mesurée du pain de réduction catalytique (12) est effectuée seulement si est détecté une stagnation des valeurs de la séquence de valeurs représentatives de l'efficacité mesurée du pain de réduction catalytique (12).

6. Dispositif de détection et de quantification des fuites d'ammoniac en aval d'un système de réduction catalytique sélective (11) d'oxydes d'azote disposé dans une ligne d'échappement (1) de moteur à combustion de véhicule automobile,
   ledit système (11) comprenant :

   un dispositif d'injection (2) pour injecter un fluide comprenant de l'ammoniac dans la ligne d'échappement (1) ; et
   un pain de réduction catalytique (12), en aval du dispositif d'injection (2), pour stocker l'ammoniac issu du dispositif d'injection (2) en vue d'une réaction avec les oxydes d'azote contenus dans les gaz de combustion du moteur ;

   ledit dispositif comprenant :

   des moyens de transmission agencés pour transmettre un signal de commande pour contrôler la quantité de fluide comprenant de l'ammoniac injecté par le dispositif d'injection (2) dans la ligne d'échappement (1) ;
   des moyens de réception pour recevoir une séquence de valeurs de concentration mesurée issues d'un capteur d'oxydes d'azote (5) disposé en aval du système (11), et une séquence de valeurs de concentration d'oxydes d'azote en amont du système (11);
   des moyens de traitement agencés pour calculer une séquence de valeurs représentatives de l'efficacité mesurée du pain de réduction catalytique (12), en fonction, pour chacune desdites valeurs, d'une valeur de la séquence de valeurs de concentration mesurée et d'une valeur de la séquence de valeurs de concentration d'oxydes d'azote en amont du système (11) ;
   dans lequel les moyens de traitement sont, en outre, agencés pour :

   - évaluer une valeur d'efficacité de référence ($\eta_{slip}$) du pain de réduction catalytique (12) à partir d'au moins une valeur de la séquence de valeurs représentatives de l'efficacité mesurée du pain de réduction catalytique (12), correspondant à une quantité de fluide injecté telle que le pain de réduction catalytique (12) stocke suffisamment d'ammoniac pour que se produise une réaction de réduction totale des oxydes d'azotes et alors que, concomitamment, le pain de réduction catalytique (12) a une capacité de stockage d'ammoniac insaturée ; et
   - quantifier la quantité d'ammoniac fuyant en aval du système (11) en fonction de la valeur d'efficacité de référence ($\eta_{slip}$) du pain de réduction catalytique (12), d'au moins une valeur de concentration mesurée et d'au moins une valeur de concentration d'oxydes d'azote en amont du système (11).

7. Ensemble de détection et de quantification des fuites d'ammoniac en aval d'un système de réduction catalytique sélective (11) d'oxydes d'azote disposé dans une ligne d'échappement (1) de moteur à combustion de véhicule automobile, comprenant :

   un capteur d'oxydes d'azote (5) disposé en aval du système (11) ;
   un moyen de transmission d'une séquence de valeurs de concentration d'oxydes d'azote en amont du système (11) ;

un dispositif de détection et de quantification selon la revendication 6, ce dispositif de détection est en communication avec le capteur d'oxydes d'azote (5) disposé en aval du système (11) et le moyen de transmission d'une séquence de valeurs de concentration d'oxydes d'azote en amont du système(11).

8. Ensemble de détection et de quantification des fuites d'ammoniac en aval d'un système de réduction catalytique sélective (11) d'oxydes d'azote selon la revendication 7, comprenant un capteur d'oxydes d'azote (4) disposé en amont du système de réduction catalytique sélective (11), ce capteur (4) étant en communication avec le moyen de transmission d'une séquence de valeurs de concentration d'oxydes d'azote en amont du système (11).

9. Véhicule automobile, comprenant un ensemble de détection et de quantification des fuites d'ammoniac en aval d'un système de réduction catalytique sélective (11) d'oxydes d'azote selon l'une quelconque de revendication 7 ou 8.

10. Programme d'ordinateur comprenant des instructions pour effectuer les étapes du procédé de détection et de quantification des fuites d'ammoniac en aval d'un système de réduction catalytique sélective (11) d'oxydes d'azote, selon l'une quelconque des revendications 1 à 5, lorsque ces instructions sont exécutées par un processeur.

**Patentansprüche**

1. Verfahren zur Detektion und Quantifizierung von Ammoniakleckagen stromabwärts eines Systems zur selektiven katalytischen Reduktion (11) von Stickoxiden, das in einem Auspuffstrang (1) des Verbrennungsmotors eines Kraftfahrzeugs angeordnet ist, wobei das System (11) umfasst:

   eine Einspritzvorrichtung (2) zum Einspritzen eines ammoniakhaltigen Fluids in den Auspuffstrang (1) und,
   ein katalytisches Reduktionselement (12) stromabwärts der Einspritzvorrichtung (2), um das aus der Einspritzvorrichtung (2) stammende Ammoniak im Hinblick auf eine Reaktion mit den in den Verbrennungsgasen des Motors enthaltenen Stickoxiden zu speichern,
   wobei das Verfahren Schritte umfasst, die aus Folgendem bestehen:

   (a) Generieren (50) eines Steuersignals, um die Menge des ammoniakhaltigen Fluids, die von der Einspritzvorrichtung (2) in den Auspuffstrang (1) eingespritzt wird, zu kontrollieren;
   (b) Empfangen (51) einer Sequenz von Konzentrationsmesswerten, die aus einem Stickoxidsensor (5) stammen, der stromabwärts des Systems (11) angeordnet ist;
   (c) Empfangen (52) eines Werts für die Stickoxidkonzentration stromaufwärts des Systems (11) für jeden in Schritt (b) empfangenen Wert;
   (d) Berechnen (53) einer Sequenz von Werten, die für die gemessene Effizienz des katalytischen Reduktionselements (12) repräsentativ sind, und dies für jeden der berechneten Werte in Abhängigkeit von einem in Schritt (b) empfangenen Wert und von dem entsprechenden in Schritt (c) empfangenen Wert;
   (e) Bewerten (A5, B5, 64) eines Referenzeffizienzwerts ($\eta_{slip}$) des katalytischen Reduktionselements (12) ausgehend von mindestens einem Wert der in Schritt (d) berechneten Sequenz, der einer solchen eingespritzten Fluidmenge entspricht, dass das katalytische Reduktionselement (12) genügend Ammoniak speichert, damit eine Reaktion zur vollständigen Reduktion der Stickoxide eintritt, während gleichzeitig das katalytische Reduktionselement (12) eine Kapazität zur Speicherung von ungesättigtem Ammoniak hat, und
   (f) Quantifizieren (65) der Ammoniakkonzentration in den Abgasen stromabwärts des Systems zur selektiven katalytischen Reaktion (11) in Abhängigkeit von:

   - dem Referenzeffizienzwert ($\eta_{slip}$) des katalytischen Reduktionselements (12);
   - mindestens einem Konzentrationsmesswert, der aus dem Stickoxidsensor (5) stammt, der stromabwärts des Systems angeordnet ist, und
   - dem entsprechenden Wert, für den mindestens einen Konzentrationsmesswert, der Stickoxidkonzentration stromaufwärts des Systems (11).

2. Verfahren nach Anspruch 1, umfassend während des Schritts (e) das Berechnen (54, 59) einer Sequenz von Werten für die Änderung der gemessenen Effizienz des katalytischen Reduktionselements (12) ausgehend von der in Schritt (d) berechneten Sequenz.

3. Verfahren nach Anspruch 2, umfassend während des Schritts (e) das Detektieren (B5) einer Verringerung der Werte der Sequenz von Werten für die Änderung der gemessenen Effizienz des katalytischen Reduktionselements (12).

4. Verfahren nach einem der Ansprüche 1 bis 3, umfassend während des Schritts (e) das Detektieren (A5) einer Stagnation der Werte der Sequenz von Werten, die für die gemessene Effizienz des katalytischen Reduktionselements (12) repräsentativ sind.

5. Verfahren nach Anspruch 4, wenn abhängig von Anspruch 3, wobei während des Schritts (e) die Detektion der Verringerung der Werte der Sequenz von Werten für die Änderung der gemessenen Effizienz des katalytischen Reduktionselements (12) nur ausgeführt wird, wenn eine Stagnation der Werte der Sequenz von Werten, die für die gemessene Effizienz des katalytischen Reduktionselements (12) repräsentativ sind, detektiert wird.

6. Vorrichtung zur Detektion und zur Quantifizierung von Ammoniakleckagen stromabwärts eines Systems zur selektiven katalytischen Reduktion (11) von Stickoxiden, das in einem Auspuffstrang (1) des Verbrennungsmotors eines Kraftfahrzeugs angeordnet ist, wobei das System (11) umfasst:

   eine Einspritzvorrichtung (2) zum Einspritzen eines ammoniakhaltigen Fluids in den Auspuffstrang (1) und
   ein katalytisches Reduktionselement (12) stromabwärts der Einspritzvorrichtung (2), um das aus der Einspritzvorrichtung (2) stammende Ammoniak im Hinblick auf eine Reaktion mit den in den Verbrennungsgasen des Motors enthaltenen Stickoxiden zu speichern,
   wobei die Vorrichtung umfasst:

      Übertragungsmittel, die so eingerichtet sind, dass sie ein Steuersignal übertragen, um die Menge des ammoniakhaltigen Fluids, die von der Einspritzvorrichtung (2) in den Auspuffstrang (1) eingespritzt wird, zu kontrollieren;
      Empfangsmittel zum Empfangen einer Sequenz von Konzentrationsmesswerten, die aus einem Stickoxidsensor (5) stammen, der stromabwärts des Systems (11) angeordnet ist, und einer Sequenz von Werten für die Stickoxidkonzentration stromaufwärts des Systems (11);
      Verarbeitungsmittel, die so eingerichtet sind, dass sie eine Sequenz von Werten berechnen, die für die gemessene Effizienz des katalytischen Reduktionselements (12) repräsentativ sind, und dies für jeden der Werte in Abhängigkeit von einem Wert der Sequenz von Konzentrationsmesswerten und einem Wert der Sequenz von Werten für die Stickoxidkonzentration stromaufwärts des Systems (11);
      wobei die Verarbeitungsmittel darüber hinaus eingerichtet sind zum:

         - Bewerten eines Referenzeffizienzwerts ($\eta_{slip}$) des katalytischen Reduktionselements (12) ausgehend von mindestens einem Wert der Sequenz von Werten, die für die gemessene Effizienz des katalytischen Reduktionselements (12) repräsentativ sind, der einer solchen eingespritzten Fluidmenge entspricht, dass das katalytische Reaktionselement (12) genügend Ammoniak speichert, damit eine Reaktion zur vollständigen Reduktion der Stickoxide eintritt, während gleichzeitig das katalytische Reduktionselement (12) eine Kapazität zur Speicherung von ungesättigtem Ammoniak hat, und
         - Quantifizieren der Ammoniakleckagemenge stromabwärts des Systems (11) in Abhängigkeit vom Referenzeffizienzwert ($\eta_{slip}$) des katalytischen Reduktionselements (12), mindestens eines Konzentrationsmesswerts und mindestens eines Werts für die Stickoxidkonzentration stromaufwärts des Systems (11).

7. Anordnung zur Detektion und zur Quantifizierung von Ammoniakleckagen stromabwärts eines Systems zur selektiven katalytischen Reduktion (11) von Stickoxiden, das in einem Auspuffstrang (1) des Verbrennungsmotors eines Kraftfahrzeugs angeordnet ist, umfassend:

   einen Stickoxidsensor (5), der stromabwärts des Systems (11) angeordnet ist;
   Mittel zur Übertragung einer Sequenz von Werten für die Stickoxidkonzentration stromaufwärts des Systems (11);
   eine Vorrichtung zur Detektion und zur Quantifizierung nach Anspruch 6, wobei diese Detektionsvorrichtung mit dem Stickoxidsensor (5), der stromabwärts des Systems (11) angeordnet ist, und mit dem Mittel zur Übertragung einer Sequenz von Werten für die Stickoxidkonzentration stromaufwärts des Systems (11) in Verbindung steht.

8. Anordnung zur Detektion und zur Quantifizierung von Ammoniakleckagen stromabwärts eines Systems zur selektiven katalytischen Reduktion (11) von Stickoxiden nach Anspruch 7, umfassend einen Stickoxidsensor (4), der stromaufwärts des Systems zur selektiven katalytischen Reduktion (11) angeordnet ist, wobei dieser Sensor (4) mit dem Mittel zur Übertragung einer Sequenz von Werten für die Stickoxidkonzentration stromaufwärts des Systems (11) in Verbindung steht.

9. Kraftfahrzeug mit einer Anordnung zur Detektion und zur Quantifizierung von Ammoniakleckagen stromabwärts eines Systems zur selektiven katalytischen Reduktion (11) von Stickoxiden nach einem der Ansprüche 7 oder 8.

10. Computerprogramm mit Anweisungen zum Ausführen der Schritte des Verfahrens zur Detektion und zur Quantifizierung von Ammoniakleckagen stromabwärts eines Systems zur selektiven katalytischen Reduktion (11) von Stickoxiden nach einem der Ansprüche 1 bis 5, wenn diese Anweisungen von einem Prozessor ausgeführt werden.

**Claims**

1. Method for detecting and quantifying leaks of ammonia downstream of a system (11) for the selective catalytic reduction of nitrogen oxides which is placed in an exhaust line (1) of a motor vehicle internal combustion engine, said system (11) comprising:

   an injection device (2) for injecting an ammonia-containing fluid into the exhaust line (1); and
   a catalytic-reduction brick (12), downstream of the injection device (2), for storing the ammonia derived from the injection device (2) with a view to it reacting with the nitrogen oxides contained in the combustion gases from the engine;

   said method comprising steps consisting in:

   (a) generating (50) a control signal for controlling the quantity of ammonia-containing fluid injected by the injection device (2) into the exhaust line (1);
   (b) receiving (51) a sequence of measured-concentration values derived from a nitrogen oxide sensor (5) positioned downstream of the system (11);
   (c) for each value received in step (b), receiving (52) a value for the concentration of nitrogen oxides upstream of the system (11);
   (d) calculating (53) a sequence of values indicative of the measured efficiency of the catalytic-reduction brick (12) as a function, in the case of each of said calculated values, of a value received in step (b) and of the corresponding value received in step (c);
   (e) evaluating (A5, B5, 64) a reference-efficiency value ($\eta_{slip}$) for the catalytic-reduction brick (12), from at least one value of the sequence calculated in step (d), corresponding to a quantity of injected fluid that is such that the catalytic-reduction brick (12) stores enough ammonia for the nitrogen oxides reduction reaction produced to be a total reduction and whereas, at the same time, the catalytic-reduction brick (12) has the ability to store unsaturated ammonia; and
   (f) quantifying (65) the ammonia concentration in the exhaust gases downstream of the selective catalytic reduction system (11) as a function of:

   - the reference-efficiency value ($\eta_{slip}$) for the catalytic-reduction brick (12);
   - at least one measured-concentration value derived from the nitrogen oxides sensor (5) positioned downstream of the system; and
   - the corresponding value, in the case of said at least one measured-concentration value, of nitrogen oxide concentration upstream of the system (11).

2. Method according to Claim 1, comprising, during step (e), calculating (54, 59) a sequence of values for the variation in measured efficiency of the catalytic-reduction brick (12), on the basis of the sequence calculated in step (d).

3. Method according to Claim 2, comprising, during step (e), detecting (B5) a decrease in the values of the sequence of values for the variation in measured efficiency of the catalytic-reduction brick (12).

4. Method according to any one of Claims 1 to 3, comprising, during step (e), detecting (A5) a stagnation of the values in the sequence of values indicative of the measured efficiency of the catalytic-reduction brick (12).

5. Method according to Claim 4 when dependent on Claim 3, in which, during step (e), detection of the decrease in the values of the sequence of values for the variation in measured efficiency of the catalytic-reduction brick (12) is performed only if a stagnation of the values of the sequence of values indicative of the measured efficiency of the catalytic-reduction brick (12) is detected.

6. Device for detecting and quantifying leaks of ammonia downstream of a system (11) for the selective catalytic reduction of nitrogen oxides which is placed in an exhaust line (1) of a motor vehicle internal combustion engine, said system (11) comprising:

    an injection device (2) for injecting an ammonia-containing fluid into the exhaust line (1); and
    a catalytic-reduction brick (12), downstream of the injection device (2), for storing the ammonia derived from the injection device (2) with a view to it reacting with the nitrogen oxides contained in the combustion gases from the engine;

said device comprising:

    transmission means designed to transmit a control signal for controlling the quantity of ammonia-containing fluid injected by the injection device (2) into the exhaust line (1);
    reception means for receiving a sequence of measured-concentration values derived from a nitrogen oxide sensor (5) positioned downstream of the system (11), and a sequence of values of the concentration of nitrogen oxides upstream of the system (11);
    processing means designed to calculate a sequence of values indicative of the measured efficiency of the catalytic-reduction brick (12) as a function, in the case of each of said values, of a value from the sequence of measured-concentration values and of a value from the sequence of values for the concentration of nitrogen oxides upstream of the system (11);
    in which device the processing means are also designed to:

        - evaluate a reference-efficiency value ($\eta_{slip}$) for the catalytic-reduction brick (12), from at least one value for the sequence of values indicative of the measured efficiency of the catalytic-reduction brick (12), corresponding to a quantity of injected fluid that is such that the catalytic-reduction brick (12) stores enough ammonia for the nitrogen oxides reduction reaction produced to be a total reduction and whereas, at the same time, the catalytic-reduction brick (12) has the ability to store unsaturated ammonia; and
        - quantify the quantity of ammonia leaking downstream of the system (11), as a function of the reference-efficiency value ($\eta_{slip}$) for the catalytic-reduction brick (12), of at least one measured-concentration value of at least one value for the concentration of nitrogen oxides upstream of the system (11).

7. Assembly for detecting and quantifying leaks of ammonia downstream of a system (11) for the selective catalytic reduction of nitrogen oxides which is positioned in an exhaust line (1) of a motor vehicle combustion engine, comprising:

    a nitrogen oxides sensor (5) positioned downstream of the system (11);
    a means of transmitting a sequence of values for the concentration of nitrogen oxides upstream of the system (11);
    a detection and quantification device according to Claim 6; this detection device is in communication with the nitrogen oxides sensor (5) positioned downstream of the system (11) and the means of transmitting a sequence of values for the concentration of nitrogen oxides upstream of the system (11).

8. Assembly for detecting and quantifying leaks of ammonia downstream of a system (11) for the selective catalytic reduction of nitrogen oxides according to Claim 7, comprising a nitrogen oxides sensor (4) positioned upstream of the selective catalytic reduction system (11), this sensor (4) being in communication with the means of transmitting a sequence of values of the concentration of nitrogen oxides upstream of the system (11).

9. Motor vehicle comprising an assembly for detecting and quantifying leaks of ammonia downstream of a system (11) for the selective catalytic reduction of nitrogen oxides according to either one of Claims 7 and 8.

10. Computer program comprising instructions for performing the steps of the method for detecting and quantifying leaks of ammonia downstream of a system (11) for the selective catalytic reduction of nitrogen oxides according to any one of Claims 1 to 5, when these instructions are executed by a processor.

## Fig.1

## Fig.2

Efficacité du catalyseur vue par les capteurs NOₓ

Masse de NH₃ stockée dans le catalyseur

(g)

## Fig.3

## Fig.4

**Fig.5**

```
           ┌──────────┐
    50 ─┐  │   Inj    │
         └─└──────────┘
                │
                ▼
           ┌──────────┐
    51 ─┐  │ NOx_aval │
         └─└──────────┘
                │
                ▼
           ┌──────────┐
    52 ─┐  │ NOx_amont│
         └─└──────────┘
                │
                ▼
           ┌──────────┐
    53 ─┐  │ η_sensor │
         └─└──────────┘
```

$$\Delta\eta = \frac{\eta_{i+1} - \eta_i}{\eta_i}$$ (54)

$$Lim_{inf} \le \Delta\eta \le Lim_{sup}$$ (55) — y

$$count_1 + 1$$ (56)

$$count_1 \le Lim_{count}^1$$ (57) — y

$$Lim_{inf} \le \Delta\eta \le Lim_{sup}$$ (58) — y

A5

B5 (59)

$$\Delta\eta = \frac{\eta_{i+1} - \eta_i}{\eta_i}$$

$$\Delta\eta \le Lim_{inf}$$ (60) — y

$$count_2 + 1$$ (61)

$$count_2 \le Lim_{count}^2$$ (62)

$$\Delta\eta \le Lim_{inf}$$ (63)

```
           ┌──────────┐
    64 ─┐  │   slip   │
         └─└──────────┘
                │
                ▼
           ┌──────────┐
    65 ─┐  │  [NH3]   │
         └─└──────────┘
```

EP 3 090 154 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010024390 A
- US 20050282285 A
- US 20110005202 A
- US 20110005203 A
- WO 2011093772 A